# EUROPEAN PATENT APPLICATION

(11) **EP 1 858 196 A1**
(43) Date of publication of application: **21.11.2007**
(21) Application number: 06791013.3
(22) Date of filing: 15.09.2006
(51) Int. Cl.: H04L 12/02

(54) **A BROADBAND AND NARROW-BAND UNIFICATION BOARD OF THE INTEGRATED ACCESS DEVICE**

(30) Priority: 06.12.2005 CN 200510127900
(71) Applicant: Huawei Technologies Co Ltd, Longgang District, Shenzhen Guangdong 518129 (CN)
(72) Inventor: ZHAO, Xueyi, Guangdong 518129 (CN); LI, Dong, Guangdong 518129 (CN); MA, Peng, Guangdong 518129 (CN); SHENG, Hui, Guangdong 518129 (CN); XU, Zheng, Guangdong 518129 (CN); YAN, Zhiguo, Guangdong 518129 (CN); GAO, Xingguo, Guangdong 518129 (CN); FENG, Zhishan, Guangdong 518129 (CN); ZHOU, Jinlin, Guangdong 518129 (CN); ZHANG, Shifa, Guangdong 518129 (CN)
(74) Representative: Körber, Martin Hans
(86) International application number: PCT/CN2006/002419
(87) International publication number: WO 2007/065330

(57) **Abstract**

The embodiments of the present invention disclose a broadband-narrowband combining board in an integrated access apparatus, which includes a broadband processing module, a narrowband processing module and a separator module, wherein the broadband processing module, and/or the narrowband processing module and/or the separator module are equipped with an interface for transmitting data and control information respectively, and the broadband processing module, the narrowband processing module and the separator module are removably connected to a connector. The embodiments of the present invention also disclose an apparatus including a broadband-narrowband combining board. The broadband-narrowband combining board in accordance with the embodiments of the present invention may be configured according to the demands of subscribers, which brings more flexibility and convenience to the application of the broadband-narrowband combining board.

## Description

### Field of the Invention

The present invention relates to the communication apparatus, and more particular, to a broadband-narrowband combining board in an integrated access apparatus.

### Background of the Invention

Along with increasing demands of subscribers for network transmission quality and transmission performance, optical fiber access, as having well scalability and quality guarantee, comes into the mainstream of access applications adopted by large customers. The access network accordingly develops from supporting narrowband voice services to providing broadband integrated services. As the access network extends, the provision of subscriber oriented services is gradually taken by the access network, and the access network turns from a network providing a single service and limited interfaces to an integrated service access platform with ever growing functions.

The idea of broadband-narrowband integrated access, i.e., offering varieties of broadband and narrowband services including voice, data, video and private line services to subscribers through a single system, is put forward in comparison with the conventional practice in which two systems are used for offering broadband services and narrowband services respectively.

In practical applications, an integrated access apparatus is more complicated than a pure narrowband access apparatus or a broadband Digital Subscriber Line Access Multiplexer (DSLAM), because varieties of broadband and narrowband services require the broadband-narrowband integrated access apparatus to have TDM and a packet switched network with high performance to support a three-bus structure with Time Division Multiplex (TDM), Internet Protocol (IP) and Asynchronous Transmission Mode (ATM).

With respect to the service access capability, the integrated access apparatus offers a centralized access capacity to simultaneously support narrowband services including Plain Old Telephone Service (POTS), Integrated Service Digital Network (ISDN) and Digital Data Network (DDN) and broadband services including Asymmetrical Digital Subscriber Line (ADSL), Very high speed Digital Subscriber Line (VDSL), Single-pair High-speed Digital Subscriber Line (SHDSL), Local Area Network (LAN), therefore various access demands of common subscribers and large customers may be fulfilled instantly with the integrated access apparatus according to the service development. Various digital subscriber lines are referred to as XDSL hereinafter.

With respect to network construction, the integrated access apparatus saves equipment room, reduces investment in supporting facilities, increases the utilization rate of public facilities and thus effectively reduces the cost of the network construction.

With respect to network maintenance and management, the integrated access apparatus provides a unified network management system for both broadband networks and narrowband networks, which facilitates the centralized maintenance and management of broadband and narrowband networks, increases operation and maintenance efficiency and reduces the cost of operation and maintenance.

With respect to the sustainable development of networks, integrated access apparatus manufacturers are thinking of further developing the integrated access apparatus into an access media gateway in softswitch so as to make the integrated access apparatus seamlessly integrate into the Next Generation Network (NGN), and thus the integrated access apparatus has a bright future.

Broadband-narrowband service combination means the access to both broadband services and narrowband services at the same time through a service single board, and the service single board is thus referred to as a broadband-narrowband combining board. The broadband-narrowband combining board functions without complex cable distribution and thus saves the room for cable distribution frames and is convenient for subscribers to activate services. Therefore the broadband-narrowband combining board has a bright future.

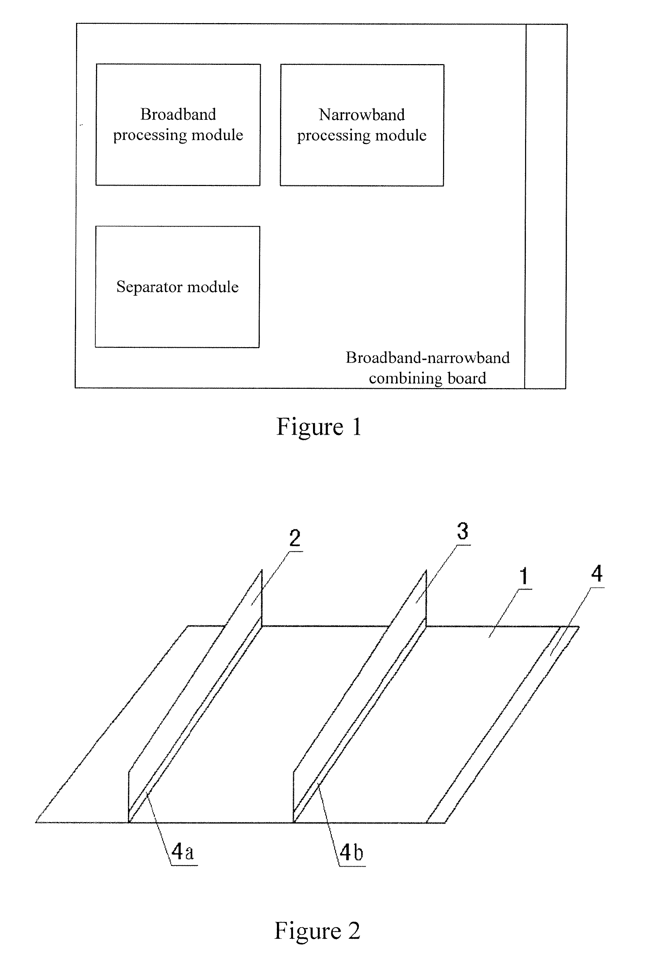

As shown in Figure 1, the broadband-narrowband combining board in the related art is a single board integrating a narrowband processing module, a broadband processing module and a separator module, in which the separator module isolates the received narrowband signals to be provided to the narrowband processing module. In practical applications, different operators have different subscriber models and the ratio between broadband and narrowband subscribers varies greatly, therefore the single board with integrated structure does not fulfill the personalized demands of subscribers. In addition, when a certain module on the single board is damaged, the whole broadband-narrowband combining board fails, thus the broadband-narrowband combining board lacks flexibility and convenience in applications. Furthermore, along with the development of broadband techniques, different broadband standards are applied in different regions, which brings a great varieties of broadband-narrowband combining boards and increases the difficulties in system maintenance.

### Summary of the Invention

The embodiments of the present invention provide a broadband-narrowband combining board in an integrated access apparatus, which may bring more flexibility and convenience to the application of the broadband-narrowband combining board.

A broadband-narrowband combining board in an integrated access apparatus includes a broadband processing module, and/or a narrowband processing module and/or a separator module, wherein
the broadband processing module, and/or the narrowband processing module and/or the separator module are equipped with an interface for transmitting data and control information respectively, and are removably connected to an interface of a connector through the interface for transmitting data and control information.

The interface for transmitting data and control information is a plug interface.

The broadband processing module and the separator module are integrated into a combined module; and the combined module is equipped with an interface for transmitting data and control information.

The narrowband processing module and the separator module are integrated into a combined module; and the combined module is equipped with an interface for transmitting data and control information.

The broadband processing module, or the narrowband processing module, or the separator module, or the combined module integrated with the broadband processing module and the separator module, or the combined module integrated with the narrowband processing module and the separator module functions independently.

The broadband processing module is a Digital Subscriber Line (XDSL) module.

The narrowband processing module is a Plain Ordinary Telephone Service (POTS) module or an Integrated Service Digital Network (ISDN) module.

The broadband processing module, the narrowband processing module, the combined module integrated with the broadband processing module and the separator module, and the combined module integrated with the narrowband processing module and the separator module are connected with each other with a backplane, or with a pinch board connector, or with a panel connector.

Through the embodiments of the present invention, more functions may be achieved with the broadband-narrowband combining board beyond the basic functions of the single boards for broadband processing, narrowband processing and separator, i.e., the broadband-narrowband combining board provided by the embodiments of the present invention may adopt corresponding broadband processing module, narrowband processing module and separator module according to the demands of subscribers, thus offer more flexibility and convenience in practical applications.

### Brief Description of the Drawings

Figure 1 is a simplified schematic diagram illustrating the structure of a broadband-narrowband combining board in the related art.
Figure 2 is a simplified schematic diagram illustrating the connection between the broadband processing module, narrowband processing module and separator module in a broadband-narrowband combining board according to an embodiment of the present invention.
Figure 3 is a simplified schematic diagram illustrating the connection between the broadband processing module, narrowband processing module and separator module in a broadband-narrowband combining board according to another embodiment of the present invention.
Figure 4 is a simplified schematic diagram illustrating the connection between the broadband processing module, narrowband processing module and separator module in a broadband-narrowband combining board according to another embodiment of the present invention.

### Detailed Description of the Invention

The broadband-narrowband combining board provided by the embodiments of the present invention includes a broadband processing module, a narrowband processing module and a separator module, in which the broadband processing module, the narrowband processing module and, the separator module are configured respectively with an interface for transmitting data and control information, thus may be removably connected to a corresponding interface of a connector through the interface.

The broadband processing module may be an XDSL processing module, the narrowband processing module may be a POTS or ISDN processing module and the separator module may be a Splitter module. The broadband processing module may be integrated with the separator module in accordance with the embodiments of the present invention to form a combined module, or the narrowband processing module may be integrated with the separator module in accordance with the embodiments of the present invention to form another combined module, e.g., the combined module may include the POTS module and the Splitter module, or include the ISDN module and the Splitter module, or include the XDSL module and the Splitter module.

The broadband processing module, the narrowband processing module, the separator module, the combined module of the broadband processing module and the separator module, and the combined module of the narrowband processing module and the separator module may function as a single board respectively, i.e., each module may function independently without influencing each other.

The broadband processing module, the narrowband processing module, the separator module, the combined module of the broadband processing module and the separator module, or the combined module of the narrowband processing module and the separator module are configured with an interface for transmitting data and control information respectively.

Since each module is removably connected to the connector and may function as an independent single board, the broadband-narrowband combining board in accordance with the embodiments of the present invention may be an independent XDSL single board, or an independent POTS or ISDN single board, or an independent Splitter single board, or an independent single board combining the POTS module and the Splitter module, or an independent single board combining the ISDN module and the Splitter module, or an independent single board combining the XDSL module and the Splitter module, or a broadband-narrowband combining board including the broadband processing module, narrowband processing module and separator module described in the fore-going description, e.g., a broadband-narrowband combining board including the POTS module, the XDSL module and the Splitter module. The broadband-narrowband combining board in accordance with the embodiments of the present invention may also include a narrowband processing module and the combined module of a broadband processing module and a separator module, e.g., a broadband-narrowband combining board including the POTS module and the combined module of the XDSL module and the Splitter module, or a broadband-narrowband combining board including the ISDN module and the combined module of the XDSL module and the Splitter module. The broadband-narrowband combining board in accordance with the embodiments of the present invention may also include a broadband processing module and the combined module of a narrowband processing module and a separator module, e.g., a broadband-narrowband combining board including the XDSL module and the combined module of the POTS module and the Splitter module, or a broadband-narrowband combining board including the XDSL module and the combined module of the ISDN module and the Splitter module.

The embodiments of the present invention are further explained with reference to accompanying drawings. The broadband-narrowband combining board including a broadband processing module and a combined module of a narrowband processing module and a separator module is taken as an example to describe the embodiments of the present invention.

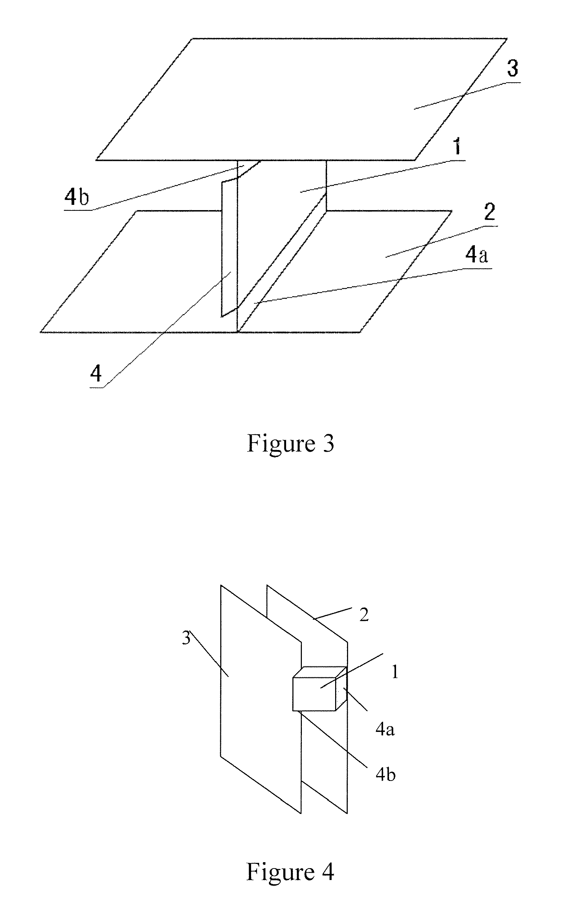

As shown in Figure 2, Interface 4, which is connected to an integrated access apparatus and corresponds to an interface of the broadband-narrowband combining board in the integrated access apparatus, is set on an end of Connector 1 and may be a plug interface. Interface 4a, which corresponds to an interface of Broadband processing module 2, is set on the surface of Connector 1 and may be a plug interface through which Broadband processing module 2 is plugged into Connector 1. Interface 4b, which corresponds to an interface of Combined module 3 combining a narrowband processing module and a separator module, is also set on the surface of Connector 1 and may also be a plug interface through which Combined module 3 is plugged into Connector 1. In Figure 3, Broadband processing module 2 and Combined module 3 combining the narrowband processing module and the separator module are connected to each other with a backplane. The integrated access apparatus transmits data and control information to Connector 1 through Interface 4 between the broadband-narrowband combining board and Connector 1. The data and control information are transmitted between the integrated access apparatus and Broadband processing module 2 through Interface 4a between Broadband processing module 2 and Connector 1, and the data and control information are transmitted between the integrated access apparatus and Combined module 3 through Interface 4b between Combined module 3 and Connector 1.

Broadband processing module 2 and Combined module 3 in the broadband-narrowband combining board described herein may be adjusted according to the demands of subscribers, e.g., the broadband-narrowband combining board may be reduced to either of Broadband processing module 2 and Combined module 3 so as to function as a corresponding single board, which greatly increases the flexibility of the broadband-narrowband combining board in practical applications.

As shown in Figure 3, Interface 4, which is connected to the integrated access apparatus and corresponds to an interface of the broadband-narrowband combining board in the integrated access apparatus, is set on an end of Connector 1 and may be a plug interface. Two interfaces, Interfaces 4a and 4b, are set upon two ends adjacent to Interface 4 on Connector 1, Broadband processing module 2 is connected to Connector 1 through Interface 4a and Combined module 3 combining a narrowband processing module and a separator module is connected to Connector 1 through Interface 4b. In Figure 3, Broadband processing module 2 and Combined module 3 combining the narrowband processing module and the separator module are connected to each other with a backplane connector or a pinch board connector. The integrated access apparatus transmits data and control information to Connector 1 through Interface 4 between the broadband-narrowband combining board and Connector 1. The data and control information are transmitted between the integrated access apparatus and Broadband processing module 2 through Interfaces 4a between Broadband processing module 2 and Connector 1, and the data and control information are transmitted between the integrated access apparatus and Combined module 3 through Interface 4b between the Combined module 3 and Connector 1.

As shown in Figure 4, Broadband processing module 2 is connected to the integrated access apparatus and Combined module 3 combining the narrowband processing module and the separator module is also connected to the integrated access apparatus. Connector 1 connects Broadband processing module 2 and Combined module 3, in which Connector 1 is connected to Broadband processing module 2 through Interface 4a and to Combined module 3 through Interface 4b. In Figure 4, Broadband processing module 2 and Combined module 3 combining the narrowband processing module and the separator module are connected to each other with a panel connector or a pinch board connector. The integrated access apparatus transmits data and control information to Broadband processing module 2 through an interface to Broadband processing module 2 and transmits data and control information to Combined module 3 combining the narrowband processing module and the separator module through an interface to Combined module 3, while Broadband processing module 2 and Combined module 3 combining the narrowband processing module and the separator module transmit data and control information through Connector 1.

## Claims

1. A broadband-narrowband combining board in an integrated access apparatus, comprising a broadband processing module, and/or a narrowband processing module and/or a separator module, wherein
the broadband processing module, and/or the narrowband processing module and/or the separator module are equipped with an interface for transmitting data and control information respectively, and are removably connected to an interface of a connector through the interface for transmitting data and control information.

2. The broadband-narrowband combining board of Claim 1, wherein the interface for transmitting data and control information is a plug interface.

3. The broadband-narrowband combining board of Claim 1, wherein the broadband processing module and the separator module are integrated into a combined module; and the combined module is equipped with an interface for transmitting data and control information.

4. The broadband-narrowband combining board of Claim 1, wherein the narrowband processing module and the separator module are integrated into a combined module; and the combined module is equipped with an interface for transmitting data and control information.

5. The broadband-narrowband combining board of any of Claims 1 to 4, wherein the broadband processing module, or the narrowband processing module, or the separator module, or the combined module integrated with the broadband processing module and the separator module, or the combined module integrated with the narrowband processing module and the separator module functions independently.

6. The broadband-narrowband combining board of any of Claims 1 to 4, wherein the broadband processing module is a Digital Subscriber Line (XDSL) module.

7. The broadband-narrowband combining board of any of Claims 1 to 4, wherein the narrowband processing module is a Plain Ordinary Telephone Service (POTS) module or an Integrated Service Digital Network (ISDN) module.

8. The broadband-narrowband combining board of any of Claims 1 to 4, wherein the broadband processing module, the narrowband processing module, the combined module integrated with the broadband processing module and the separator module, and the combined module integrated with the narrowband processing module and the separator module are connected with each other with a backplane, or with a pinch board connector, or with a panel connector.
